# EUROPÄISCHE PATENTSCHRIFT

(11) **EP 2 668 038 B1**
(45) Veröffentlichungstag und Bekanntmachung des Hinweises auf die Patenterteilung: **17.09.2014**
(21) Anmeldenummer: 12715586.9
(22) Anmeldetag: 03.04.2012
(51) Int. Cl.: B41C 1/05, B41C 1/18, B23K 26/08, B23K 26/14

(54) **VERFAHREN UND VORRICHTUNG ZUR BEARBEITUNG EINES ZYLINDRISCHEN WERKSTÜCKS MIT MINDESTENS EINEM LASERSTRAHL**
METHOD AND DEVICE FOR MACHINING A CYLINDRICAL WORKPIECE WITH AT LEAST ONE LASER BEAM
PROCEDE ET DISPOSITIF POUR USINER UNE PIECE CYLINDRIQUE PAR AU MOINS UN FAISCEAU LASER

(30) Priorität: 26.04.2011 DE 102011018687
(43) Veröffentlichungstag der Anmeldung: 04.12.2013
(73) Patentinhaber: HELL Gravure Systems GmbH & Co. KG, 24148 Kiel (DE)
(72) Erfinder: JÜRGENSEN, Malte, 24782 Rickert (DE)
(74) Vertreter: Thomas, Götz
(86) Internationale Anmeldenummer: PCT/EP2012/001467
(87) Internationale Veröffentlichungsnummer: WO 2012/146343

(56) Entgegenhaltungen:
- EP-A1- 1 593 493
- DE-A1- 10 303 063
- US-A1- 2010 248 151

## Beschreibung

Die Erfindung betrifft ein Verfahren und eine Vorrichtung zur Bearbeitung eines zylindrischen Werkstücks mit mindestens einem Laserstrahl, insbesondere zur Herstellung eines Druck- oder Prägezylinders, gemäß dem Oberbegriff der Ansprüche 1 bzw. 8.

Bei der Direktgravur von Druck- oder Prägezylindern mittels eines oder mehrerer Laserstrahlen werden diese zylindrischen Werkstücke in eine Graviermaschine eingespannt und mit einer hohen Drehgeschwindigkeit um ihre Längsmittelachse in Drehung versetzt. Der von einer Laserstrahlungsquelle erzeugte Laserstrahl wird in ein Laserbearbeitungswerkzeug der Graviermaschine zugeführt, aus dem der Laserstrahl auf die Oberfläche des rotierenden Druck- oder Prägezylinders gelenkt wird, während sich das Laserbearbeitungswerkzeug in axialer Richtung der Drehachse des Druck- oder Prägezylinders an diesem entlang bewegt. Dadurch bewegt sich der Laserstrahl entlang eines schraubenförmigen Bewegungspfades über die Umfangsfläche des Druck- oder Prägezylinders. Dort, wo der Laserstrahl auf die Umfangsfläche auftrifft, wird durch die thermische Energie des Laserstrahls Material an der Oberfläche geschmolzen und verdampft, wodurch in der Oberfläche Vertiefungen ausgehoben werden. Bei der Direktgravur von Tiefdruckzylindern weisen diese Vertiefungen die Form von Näpfchen oder Zellen auf, die in einen vorgegebenen Raster angeordnet sind und zur Aufnahme von Druckfarbe dienen.

Allerdings tritt vor allem bei der Lasergravur von metallischen Werkstücken das Problem auf, dass sich ein Teil des aus den Vertiefungen ausgehobenen Materials in Form von kleinen, aus Schmelzauswurf, Schmauch oder Abbrand bestehenden Partikeln, die nachfolgend auch als Abraum bezeichnet werden, entweder innerhalb der gravierten Vertiefungen oder entlang der Ränder derselben niederschlägt oder ablagert, wodurch nach der Gravur eine Reinigung der Werkstücke erforderlich wird. Bei der Gravur von Tiefdruckformen führt eine Ablagerung von Abraum innerhalb der Näpfchen zudem dazu, dass das Näpfchenvolumen nicht den gewünschten Sollwert besitzt und Abweichung des Farb- oder Tonwerts auftreten, während eine Ablagerung von Abraum auf den Rändern der Näpfchen zur Folge hat, dass die zum Abstreifen überschüssiger Druckfarbe beim Drucken dienende Rakel nicht auf einer glatten Oberfläche aufliegt und somit die überschüssige Druckfarbe nicht sauber abgestreift werden kann.

Aus der DE 198 41 168 A1 und der DE 103 03 063 A1 sind bereits Verfahren zur Bearbeitung von ebenen Werkstückoberflächen mit einem Laserstrahl bekannt, bei denen durch die Bearbeitung mit dem Laserstrahl Vertiefungen im Werkstück ausgehoben werden und bei denen die zu bearbeitenden Werkstückoberflächen zuvor mit einer Schicht einer Flüssigkeit bedeckt oder überzogen werden, um unter anderem bei der Bearbeitung auftretende Rückstände wegzusprengen bzw. unerwünschte Materialablagerungen oder Materialaufwürfe an den Rändern der Vertiefungen zu vermeiden.

Bei den bekannten Verfahren wird die gesamte zu bearbeitende Oberfläche des Werkstücks mit der Flüssigkeit überschichtet, bevor mit der Laserbearbeitung begonnen wird. Eine solche Vorgehensweise ist jedoch bei der Laserbearbeitung von schnell rotierenden zylindrischen Werkstücken, wie bei der Lasergravur eines Druck- oder Prägezylinders, aus zwei Gründen ungeeignet: Zum einen wird eine vor der Bearbeitung auf die Umfangsfläche des Zylinders aufgebrachte Flüssigkeitsschicht durch die auf die Flüssigkeit einwirkenden Zentrifugalkräfte vollständig oder teilweise von der Umfangsfläche abgeschleudert. Dadurch wird die Schichtstärke der Flüssigkeitsschicht mit zunehmender Bearbeitungsdauer immer dünner, so dass schon nach kurzer Zeit die gewünschte Wirkung nicht mehr erzielt werden kann. Zum anderen weisen vor allem die zur Direktgravur von metallischen Druck- oder Prägezylindern eingesetzten Laserstrahlen relativ hohe Energiedichten auf, wodurch die Flüssigkeit nicht nur direkt entlang des Bewegungspfades des Laserstrahls erwärmt und verdampft wird, sondern auch in einem Bereich von etwa 0,5 bis 1 Millimeter Breite beiderseits von diesem Bewegungspfad. Bei der Gravur eines Druck- oder Prägezylinders verläuft der Bewegungspfad des Laserstrahls schrauben- oder wendelförmig über die Umfangsfläche des Zylinders, wobei benachbarte Bearbeitungsspuren in der Regel Abstände von weniger als 20 µm aufweisen. Wenn jedoch die Abstände der Bearbeitungsspuren sehr viel kleiner sind als die Breite des Bereichs, innerhalb dessen die Flüssigkeit beiderseits einer Bearbeitungsspur verdampft, hat dies zur Folge, dass bei der nächsten Umdrehung im Bereich der benachbarten Bearbeitungsspur keine Flüssigkeit mehr auf der Oberfläche des Druck- oder Prägezylinders vorhanden ist und daher die erwünschte Wirkung ebenfalls nicht mehr erzielt werden kann. entsprechende Probleme treten auf, wenn die Gravur in mehreren Durchgängen erfolgt, um Vertiefungen mit einer in einem Durchgang nicht erzielbaren Tiefe auszuheben.

Ausgehend hiervon liegt der Erfindung die Aufgabe zugrunde, ein Verfahren und eine Vorrichtung der eingangs genannten Art dahingehend zu verbessern, dass sich auch bei der Bearbeitung von schnell rotierenden zylindrischen Werkstücken eine Anhaftung von Schmelzauswurf oder anderem Abraum an den Umfangsflächen der Werkstücke verhindern oder minimieren lässt.

Diese Aufgabe wird bei dem erfindungsgemäßen Verfahren dadurch gelöst, dass die Umfangsfläche des rotierenden Werkstücks mit einem der Anhaftung von Schmelzauswurf an der Umfangsfläche entgegen wirkenden flüssigen Antihaftmittel benetzt wird, wobei das flüssige Antihaftmittel nicht wie bei den aus der DE 198 41 168 A1 und der DE 103 03 063 A1 bekannten Verfahren vor Beginn der Bearbeitung auf die gesamte zu bearbeitende Oberfläche sondern statt dessen nur in einem kurzen Zeitabstand von weniger als 0,1s vor dem Ausheben der Vertiefungen entlang des Bewegungspfads des Laserstrahls auf die Umfangsfläche des rotierenden Werkstücks aufgebracht wird. Auf diese Weise wird sichergestellt, dass die Umfangsfläche des zylindrischen Werkstücks am Auftreffpunkt des Laserstrahls stets von einem Film des zuvor aufgesprühten flüssigen Antihaftmittels bedeckt ist.

Das erfindungsgemäße Verfahren wird besonders vorteilhaft bei der Lasergravur von Prägezylindern eingesetzt, wenn mit dem Laserstrahl in mehreren Durchgängen größere Vertiefungen mit unterschiedlichen Tiefen, gewöhnlich zwischen 100 µm und 5 mm in dem zylindrischen Werkstück ausgehoben werden. In diesem Fall wird das Antihaftmittel zweckmäßig bei jedem Durchgang auf die zylindrische Umfangsfläche aufgebracht, bevor diese sofort danach mit dem Laserstrahl bearbeitet wird. Ohne eine solche vorangehende Benetzung mit dem Antihaftmittel würde es in einem solchen Fall vor allem an den Rändern der Vertiefungen und in den flacheren Bereichen innerhalb der Vertiefungen während der Lasergravur der tieferen Bereiche zu einer unerwünschten stärkeren Akkumulation von Abraum kommen, die sich mit dem erfindungsgemäßen Verfahren vermeiden lässt.

Bei dem flüssigen Antihaftmittel handelt es sich vorzugsweise um eine Emulsion von Öl in Wasser oder von Wasser in Öl, von der zum Erzielen der gewünschten Wirkung nur eine sehr geringe Menge benötigt wird. Jedoch können auch andere Antihaftmittel, wie Wasser oder Öl, verwendet werden. Es wird angenommen, dass das flüssige Antihaftmittel ungeachtet seiner Zusammensetzung zum einen dahingehend wirkt, dass durch seine Verdampfung beim Auftreffen des Laserstrahls ein größeres Dampfvolumen erzeugt wird, durch dessen Expansion bei der Laserbearbeitung erzeugter Schmelzauswurf oder Abbrand besser von der Umfangsfläche des zylindrischen Werkstücks weg abtransportiert wird, so dass er sich nicht wieder auf der Umfangsfläche niederschlägt, sondern statt dessen mit vorhandenen Absaugeinrichtungen abgesaugt werden kann. Sofern das flüssige Antihaftmittel brennbare Substanzen enthält, wie im Fall von Öl, einer Emulsion von Öl in Wasser oder einer Emulsion von Wasser in Öl, wird darüber hinaus angenommen, dass diese Substanzen durch die bei der Laserbearbeitung erzeugte Hitze bereits in einem gewissen Abstand vor dem Auftreffpunkt des Laserstrahls entlang von dessen Bewegungspfad verbrannt werden, wobei sich beiderseits der jeweiligen Bearbeitungsspur ein feiner Film aus festen Verbrennungsprodukten, wie Ruß, auf der Umfangsfläche des Werkstücks niederschlägt. Dieser Film bildet eine Art von Schutzschicht, auf der sich später eventueller Schmelzauswurf ablagert oder niederschlägt, jedoch ohne mit dem Material des Werkstücks zu verschmelzen, so dass sich der Schmelzauswurf bei einer späteren Reinigung des Werkstücks erheblich leichter entfernen lässt.

Gemäß einer bevorzugten Ausgestaltung der Erfindung wird das das flüssige Antihaftmittel auf die Umfangsfläche des rotierenden Werkstücks aufgebracht, indem es in Form eines Sprühstrahls oder Sprühkegels aus einer Sprühdüse auf den Bewegungspfad des Laserstrahls gesprüht wird. Dadurch erstreckt sich das flüssige Antihaftmittel entlang eines lokal begrenzten schmalen Streifens vom Auftreffpunkt des Sprühstrahls oder Sprühkegels bis zum Auftreffpunkt des Laserstrahls entlang des zukünftigen Bewegungspfades des Laserstrahls. In der Bewegungsrichtung des Laserstrahls und des Sprühstrahls oder Sprühkegels über die Umfangsfläche des rotierenden Werkstücks eilt dabei immer der Auftreffpunkt des Sprühstrahls oder Sprühkegels dem Auftreffpunkt des Laserstrahls voraus, so dass der Sprühstrahl oder Sprühkegel vor dem Laserstrahl auf die Umfangsfläche auftrifft.

Eine vorteilhafte Ausgestaltung der Erfindung sieht vor, dass das flüssige Antihaftmittel in einem konstanten Abstand vom Auftreffpunkt des Laserstrahls auf die Umfangsfläche des rotierenden Werkstücks gesprüht wird, so dass die Sprühdüse zumindest in Umfangsrichtung des rotierenden Werkstücks in einer festen Lagebeziehung zum Laserstrahl bzw. zu einem den Laserstrahl emittierenden Laserbearbeitungswerkzeug gehalten werden kann.

Gemäß einer weiteren bevorzugten Ausgestaltung der Erfindung wird das flüssige Antihaftmittel in Umfangsrichtung des rotierenden Werkstücks in einem Winkelabstand von weniger als 360 Grad und besser in einem Winkelabstand von weniger als 200 Grad vom Auftreffpunkt des Laserstrahls auf die Umfangsfläche des rotierenden Werkstücks gesprüht. Dabei sieht eine erste Alternative vor, dass der Sprühstrahl oder Sprühkegel in einem Winkelabstand von etwa 180 Grad vom Laserstrahl auf die Umfangsfläche des rotierenden Werkstücks auftrifft, was es gestattet, die Sprühdüse auf der zum Laserbearbeitungswerkzeug entgegengesetzten Seite des zylindrischen Werkstücks anzuordnen.

Eine zweite, bevorzugte Alternative sieht hingegen vor, dass sich der Auftreffpunkt des Sprühstrahls oder Sprühkegels in einem Winkelabstand von weniger 60 Grad, zweckmäßig weniger als 30 Grad und am besten von weniger als 20 Grad vom Auftreffpunkt des Laserstrahls befindet. Auf diese Weise trifft das flüssige Antihaftmittel praktisch unmittelbar vor dem Laserstrahl auf die Umfangsfläche des rotierenden Werkstücks auf, so dass seine Verweilzeit auf der Umfangsfläche und damit die Einwirkzeit der Zentrifugalkräfte auf das aufgesprühte flüssige Antihaftmittel minimiert werden können.

In beiden Fällen ist gemäß einer weiteren vorteilhaften Ausgestaltung der Erfindung gewährleistet, dass sich das zylindrische Werkstück zwischen dem Aufsprühen der Flüssigkeit auf die Bearbeitungsspur und dem Auftreffen des Laserstrahls auf die aufgesprühte Flüssigkeit um weniger als eine Umdrehung dreht, während es sich im zuletzt genannten Fall der zweiten Alternative sogar um weniger als eine halbe Umdrehung bzw. um weniger als eine Viertel Umdrehung dreht.

Dies bedeutet bei der hohen Umfangsgeschwindigkeit eines durch Lasergravur bearbeiteten Druck- oder Prägezylinders von etwa 9 bis 15 m/s, dass die Umfangsfläche des rotierenden Werkstücks bereits in einem Zeitabstand von etwa 2 bis 60 ms nach dem Aufsprühen des Antihaftmittels mit dem Laserstrahl, je nach Umfangsgeschwindigkeit und Abstand der Auftreffpunkte des flüssigen Antihaftmittels und des Laserstrahls, bearbeitet wird, so dass die Verweilzeit des flüssigen Antihaftmittels auf der Umfangsfläche in jedem Fall weniger als 0,1 s beträgt, was einen Verlust an flüssigem Antihaftmittel durch Abschleudern weitestgehend verhindert.

Um zu vermeiden, dass aus der Sprühdüse auf die Umfangsfläche des Werkstücks gesprühtes flüssiges Antihaftmittel von der Umfangsfläche des Werkstücks abprallt und infolge seiner Schwerkraft von der Umfangsfläche weg transportiert wird, ist der Auftreffpunkt des Sprühstrahls oder Sprühkegels bevorzugt oberhalb von einer horizontalen Längsmittelebene des zylindrischen Werkstücks und zweckmäßig auch oberhalb vom Auftreffpunkt des Laserstrahls auf die Umfangsfläche angeordnet.

Vorteilhaft weist der Sprühstrahl oder Sprühkegel an seinem Auftreffpunkt auf die Umfangsfläche des rotierenden Werkstücks einen Durchmesser auf, der größer ist als die Breite einer mit dem Laserstrahl ausgehobenen Vertiefung oder Bearbeitungsspur, wobei das beiderseits der Vertiefung oder Bearbeitungsspur auf die Umfangsfläche aufgesprühte flüssige Antihaftmittel bei der Bearbeitung des Werkstücks mit dem Laserstrahl mindestens teilweise verdampft wird. Sofern ein Teil des flüssigen Antihaftmittels nicht sofort verdampft wird, ist dies unkritisch, da es bei der Bearbeitung der benachbarten Spur zur Vermeidung von Anhaftungen beiträgt und später verdampft wird.

Bei der erfindungsgemäßen Vorrichtung wird die Aufgabe dadurch gelöst, dass die Vorrichtung mit Einrichtungen zum Aufbringen eines der Anhaftung von Schmelzauswurf an der Umfangsfläche entgegen wirkenden flüssigen Antihaftmittels entlang des Bewegungspfades des Laserstrahls auf die Umfangsfläche des rotierenden Werkstücks versehen ist. Diese Einrichtungen umfassen vorteilhaft eine Sprühdüse, die in der Drehrichtung des zylindrischen Werkstücks hinter einem Auftreffpunkt des Laserstrahls auf die Umfangsfläche des Werkstücks angeordnet und aus einem Speicherbehälter mit dem flüssigen Antihaftmittel beaufschlagt werden kann.

Um zu gewährleisten, dass das aus der Sprühdüse austretende Antihaftmittel vor dem Laserstrahl auf dessen Bewegungsweg gesprüht wird, weisen die Sprühdüse bzw. der aus der Sprühdüse austretende Sprühstrahl oder Sprühkegel zweckmäßig eine Längsmittelachse auf, die zusammen mit dem Laserstrahl eine zur Drehachse des zylindrischen Werkstücks senkrechte Ebene aufspannt.

Eine erste bevorzugte Vorrichtungsalternative sieht vor, dass das Laserbearbeitungswerkzeug und die Sprühdüse gemeinsam auf einem Schlitten oder Wagen montiert sind, der sich mittels eines Schlitten- oder Wagenantriebs parallel zur Drehachse des rotierenden Werkstücks verfahren lässt. Auf diese Weise kann mit einfachen Mitteln während der gesamten Laserbearbeitung sichergestellt werden, dass ein optimaler Abstand zwischen dem Auftreffpunkt des Sprühstrahls oder Sprühkegels und dem Auftreffpunkt des Laserstrahls aufrechterhalten bleibt. Bevorzugt wird diese erste Vorrichtungsalternative dort eingesetzt, wo die Auftreffpunkte des Sprühstrahls oder Sprühkegels und des Laserstrahls in Umfangsrichtung des rotierenden Werkstücks einen Winkelabstand von weniger als 90 Grad besitzen.

Gemäß einer zweiten Vorrichtungsalternative können jedoch das Laserbearbeitungswerkzeug und die Sprühdüse auch auf zwei getrennten Schlitten oder Wagen montiert sein, die sich jeweils mittels eines zugehörigen Schlitten- oder Wagenantriebs parallel zur Drehachse des rotierenden Werkstücks verfahren lassen. Diese zweite Vorrichtungsalternative wird bevorzugt dort eingesetzt, wo sich das Laserbearbeitungswerkzeug und die Sprühdüse allgemein auf entgegengesetzten Seiten des rotierenden Werkstücks befinden.

Im Folgenden wird die Erfindung anhand von zwei in der Zeichnung dargestellten Ausführungsbeispielen näher erläutert.
Fig. 1 zeigt eine perspektivische Ansicht einer Graviermaschine mit einem darin eingespannten Tiefdruckzylinder;
Fig. 2 zeigt eine schematische Querschnittsansicht der Graviermaschine und des Tiefdruckzylinders;
Fig. 3 zeigt eine schematische Draufsicht von oben auf die Graviermaschine und den Tiefdruckzylinder;
Fig. 4 zeigt eine schematische Querschnittsansicht einer etwas modifizierten Graviermaschine und des Tiefdruckzylinders entsprechend Fig. 2;
Fig. 5 zeigt eine schematische Draufsicht von oben auf die Graviermaschine und den Tiefdruckzylinder aus Fig. 4.

Die in der Zeichnung schematisch dargestellte Graviermaschine 10 dient zum Beispiel zur Gravur von Tiefdruckzylindern 12, die einzeln in der Graviermaschine 10 eingespannt und von einem Drehantrieb (nicht dargestellt) mit einer relativ hohen Umfangsgeschwindigkeit von etwa 9 bis 15 m/s um ihre Längsmittelachse 14 in Drehung versetzt werden können. Die Gravur eines in die Maschine 10 eingespannten und in Drehung versetzten Tiefdruckzylinders 12 erfolgt mit Hilfe eines Laserstrahls 16, der von einem Laserbearbeitungswerkzeug 18 aus auf eine äußere Umfangsfläche 20 des aus Kupfer oder einem anderen Metall bestehenden Tiefdruckzylinders 12 gerichtet wird, um in der Umfangsfläche 20 an gewünschten Stellen Vertiefungen in Form von Näpfchen auszuheben, die später zur Aufnahme von Druckfarbe dienen.

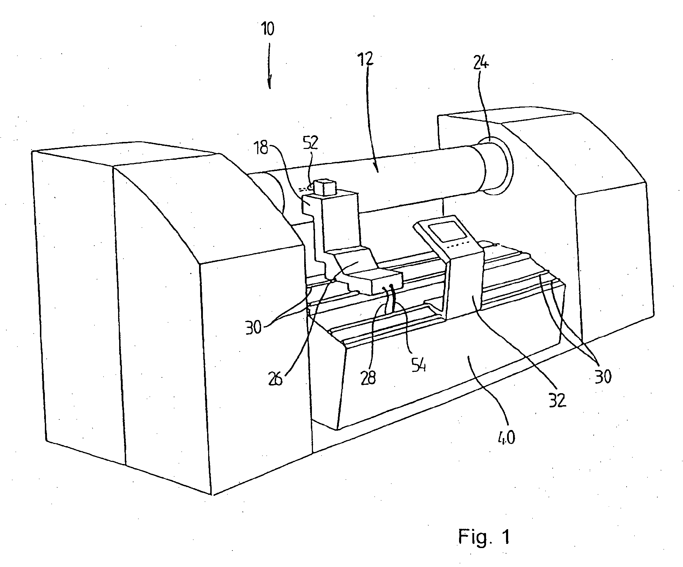

Die Graviermaschine 10 umfasst neben dem Drehantrieb zwei Halterungen 24 zum Einspannen des Tiefdruckzylinders 12, einen Gravierwagen 26, der von einem Gravierwagenantrieb (nicht dargestellt) mittels einer Spindel auf Linearführungen 30 in axialer Richtung des Druckzylinders 12 an diesem entlang bewegt werden kann und das Laserbearbeitungswerkzeug 18 trägt, sowie ein Steuerpult 32 (nur in Fig. 1 dargestellt), das ebenfalls auf Linearführungen 30 in axialer Richtung entlang des Tiefdruckzylinders 12 beweglich ist.

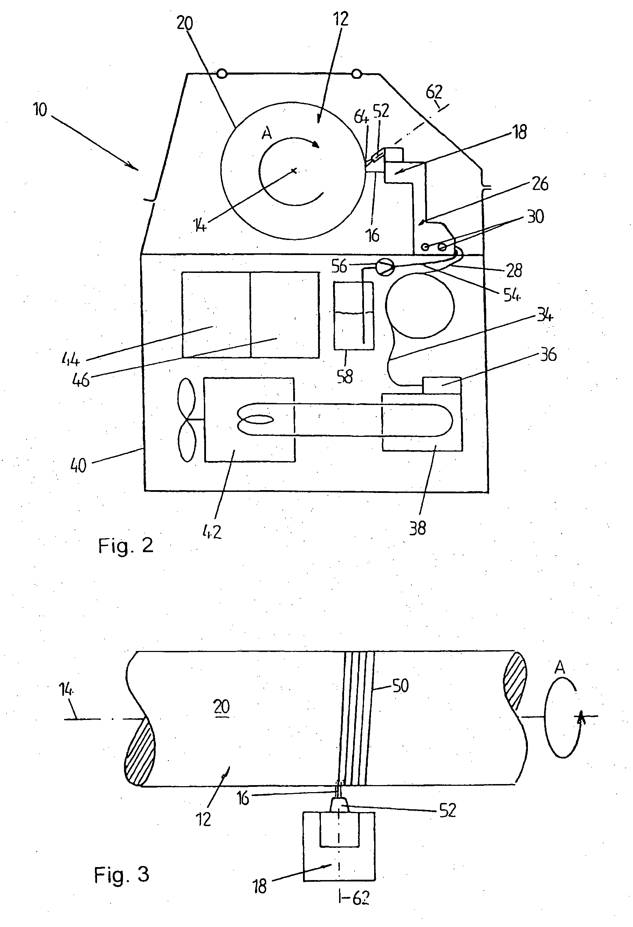

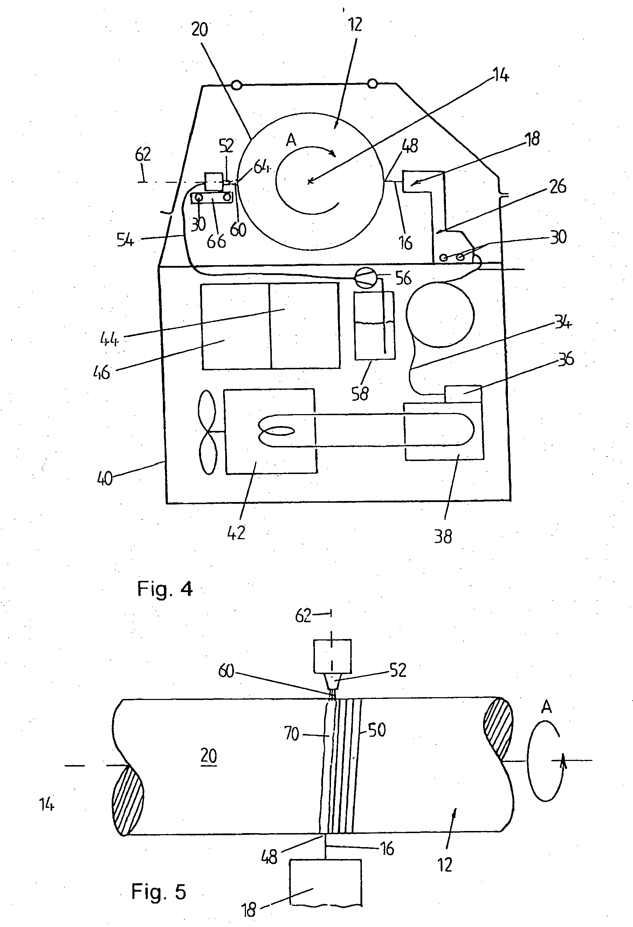

Wie am besten in Fig. 2 und 4 dargestellt, ist das Laserbearbeitungswerkzeug 18 durch eine optische Faser 28 mit einem Fiberlaser 34 verbunden, der sich zusammen mit seiner Pumpquelle 36 und einem Kühlkörper 38 zum Kühlen der Pumpquelle 36 in einem stationären Unterteil 40 der Graviermaschine 10 befindet. Das Unterteil 40 enthält weiter ein Kühlsystem 42 zum Kühlen des Kühlkörpers 38, eine Maschinensteuereinheit 44 zur Steuerung des Drehantriebs und des Gravierwagenantriebs sowie eine Lasersteuereinheit 46. Der von dem Fiberlaser 34 erzeugte Laserstrahl wird durch die optische Faser 32 in das gasdicht verschlossene Laserbearbeitungswerkzeug 18 eingespeist und tritt im Inneren desselben durch eine optische Einheit (nicht dargestellt) hindurch. Die optische Einheit dient zur Unterbrechung bzw. Ablenkung und zur Intensitätsmodulation des Laserstrahls, sowie dazu, den nicht unterbrochenen bzw. nicht abgelenkten Laserstrahl 16 nach seinem Austritt aus dem Laserbearbeitungswerkzeug 18 auf einen Auftreffpunkt 48 auf der Umfangsfläche 20 des Zylinders 12 zu fokussieren.

Zur Gravur der Umfangsfläche 20 wird der Tiefdruckzylinder 12 mittels des Drehantriebs mit hoher Geschwindigkeit in Drehung versetzt, während zugleich der Gravierwagen 26 mit dem Laserbearbeitungswerkzeug 18 in axialer Richtung am Zylinder 12 entlang bewegt wird. Dadurch bewegt sich der Auftreffpunkt 48 des nicht unterbrochenen oder abgelenkten Laserstrahls 16 entlang eines wendel- oder schraubenförmigen Bewegungspfades 50 über die Umfangsfläche 20 des Zylinders 12, wie in Fig. 3 und 5 dargestellt. Die Steigung des wendel- oder schraubenförmigen Bewegungspfades 50 ist in den Figuren 3 und 5 übertrieben dargestellt und beträgt in der Praxis über einen Umfangswinkel des Tiefdruckzylinders 12 von 360 Grad weniger als 20 µm.

Die Graviermaschine 10 umfasst weiter eine auf die Umfangsfläche 20 gerichtete Sprühdüse 52, die durch einen Schlauch 54 und eine Pumpe 56 mit einem Speicherbehälter 58 im Unterteil 40 der Graviermaschine 10 verbunden ist. Durch die Sprühdüse 52 kann ein im Speicherbehälter 58 enthaltenes flüssiges Antihaftmittel als Sprühstrahl oder Sprühkegel 60 auf den Bewegungspfad 50 des Laserstrahls 16 gesprüht werden, kurz bevor der letztere auf die Umfangsfläche 20 auftrifft.

Bei der Graviermaschine 10 in den Figuren 1 bis 3 ist die Sprühdüse 52 direkt oberhalb vom Laserbearbeitungswerkzeug 18 bzw. von dem aus dem Laserbearbeitungswerkzeug 18 austretenden Laserstrahl 16 auf dem Gravierwagen 26 montiert und schräg nach unten zu auf die Umfangsfläche 20 des Zylinders 12 gerichtet, wobei eine Längsmittelachse 62 der Sprühdüse 52 und der Laserstrahl 16 eine zur Drehachse 14 des Tiefdruckzylinders 12 allgemein senkrechte Ebene aufspannen. Die Längsmittelachse 62 der Sprühdüse 52 schneidet dort den schraubenförmigen Bewegungspfad 50 des Laserstrahls 16 in Umfangsrichtung des Tiefdruckzylinders 12 gesehen in einem Winkelabstand von weniger als 10 Grad vom Auftreffpunkt 48 des Laserstrahls 16, der in der Drehrichtung (Pfeil A) des Tiefdruckzylinders 12 somit unmittelbar hinter dem Auftreffpunkt 64 des Sprühstrahls oder Sprühkegels 60 auf die Umfangsfläche 20 liegt. Um den Auftreffpunkt 64 des Sprühstrahls oder Sprühkegels 60 noch näher an den Auftreffpunkt 48 des Laserstrahls 16 heran zu rücken, ist bei der Graviermaschine 10 in den Figuren 1 bis 3 die Längsmittelachse 62 der Sprühdüse 52 unter einem spitzen Winkel von etwa 45 Grad zu dem Laserstrahl 16 und zu der Umfangsfläche 20 des Tiefdruckzylinders 12 geneigt.

Bei der Graviermaschine 10 in den Figuren 4 und 5 befindet sich die Sprühdüse 52 auf der zum Laserbearbeitungswerkzeug 18 entgegengesetzten Seite des Tiefdruckzylinders 12, wo sie auf einem vom Gravierwagen 26 getrennten separaten Düsenwagen 66 montiert ist. Der Düsenwagen 66 lässt sich mittels eines Düsenwagenantriebs und einer Spindel synchron zum Gravierwagen 26 auf Linearführungen 30 in axialer Richtung des Zylinders 12 verfahren. Wie bei der Graviermaschine 10 in den Figuren 1 bis 3 ist die Sprühdüse 52 auf die Umfangsfläche 20 des Zylinders 12 gerichtet. Anders als die Sprühdüse 52 in Fig. 4 trifft jedoch der Sprühstrahl oder Sprühkegel 60 in einem Winkelabstand von 180 Grad vom Auftreffpunkt 48 des Laserstrahls 16 auf dessen Bewegungspfad 50 auf, so dass der zukünftige Bewegungspfad 50 des Laserstrahls 16 zwischen den Auftreffpunkten 64 bzw. 48 des Sprühstrahls oder Sprühkegels 60 und des Laserstrahls 16 auf die Umfangsfläche 20 von einem schmalen streifenförmigen Flüssigkeitsfilm 70 bedeckt ist. Der Flüssigkeitsfilm 70 wird dann am Auftreffpunkt des Laserstrahls 16 durch dessen Wärme verdampft.

Bei der Graviermaschine 10 in Fig. 4 und 5 erstreckt sich der Flüssigkeitsfilm 70 über einen Umfangswinkel von 180 Grad, während er sich bei der Graviermaschine 10 in den Figuren 1 bis 3 nur über einen Umfangswinkel von etwa 10 Grad erstreckt und zur Vereinfachung der Darstellung nicht eingezeichnet ist.

Die Menge des aus der Sprühdüse 52 austretenden flüssigen Antihaftmittels wird so dosiert, dass der streifenförmige Flüssigkeitsfilm 70 eine Breite von weniger als 5 mm, vorzugsweise 1 bis 3 mm aufweist und eine Filmdicke von weniger 400 µm, vorzugsweise von weniger als weniger 200 µm und am besten von 40 bis 100 µm besitzt. Zur Erzeugung eines solchen Films 70 werden von dem flüssigen Antihaftmittel weniger als 400 ml/m² Oberfläche, vorzugsweise weniger als weniger 200 ml/m² Oberfläche und am besten etwa 40 bis 100 ml/m² Oberfläche auf die Umfangsfläche 20 gesprüht.

Bedingt durch die hohe Drehgeschwindigkeit der Umfangsfläche 20 des Tiefdruckzylinders 12 von etwa 9 bis 15 m/s beträgt in beiden Fällen die Zeitspanne zwischen dem Auftreffen des Sprühstrahls oder Sprühkegels 60 auf die Umfangsfläche 20 und dem Auftreffen des Laserstrahls 16 auf den vom Sprühstrahl oder Sprühkegel 60 erzeugten Flüssigkeitsfilm 70 weniger als 0,1 s.

Bei dem flüssigen Antihaftmittel handelt es sich um eine Emulsion von Öl in Wasser, die dazu dient, beim Ausheben der Näpfchen oder Vertiefungen mittels des Laserstrahls 16 zu verhindern, dass bei der Bearbeitung des Tiefdruckzylinders 12 mit dem Laserstrahl 16 infolge des Verdampfens von Kupfer oder einem anderen Zylinderwerkstoff entstehender Schmelzauswurf, Schmauch oder Abbrand entlang der Ränder der ausgehobenen Näpfchen oder Vertiefungen auf der Umfangsfläche 20 des Tiefdruckzylinders 12 abgelagert wird, sowie weiter um sicherzustellen, dass eventuell abgelagerter Schmelzauswurf, Schmauch oder Abbrand nicht oder nur geringfügig an der Umfangsfläche 20 anhaften, so dass sie bei einer nachfolgenden Reinigung des Tiefdruckzylinders 12 mühelos entfernt werden können.

## Patentansprüche

1. Verfahren zur Bearbeitung eines zylindrischen Werkstücks mit mindestens einem Laserstrahl, wobei das Werkstück in Drehung versetzt und der Laserstrahl auf eine Umfangsfläche des rotierenden Werkstücks gerichtet wird, um entlang eines Bewegungspfades des Laserstrahls über die Umfangsfläche durch Schmelzen und/oder Verdampfen von Material Vertiefungen im Werkstück auszuheben, **dadurch gekennzeichnet, dass** die Umfangsfläche (20) des rotierenden Werkstücks (12) vor dem Bearbeiten mit dem Laserstrahl (16) mit einem die Anhaftung von Schmelzauswurf an der Umfangsfläche (20) minimierenden flüssigen Antihaftmittel benetzt wird, und dass das flüssige Antihaftmittel in einem kurzen Zeitabstand von weniger als 0,1 s vor dem Ausheben der Vertiefungen entlang des Bewegungspfades (50) des Laserstrahls (16) auf die Umfangsfläche (20) des rotierenden Werkstücks (12) aufgebracht wird.

2. Verfahren nach Anspruch 1, **dadurch gekennzeichnet, dass** das flüssige Antihaftmittel auf die Umfangsfläche (20) des rotierenden Werkstücks (12) gesprüht wird, wobei ein Auftreffpunkt (64) eines Sprühstrahls oder Sprühkegels (60) des flüssigen Antihaftmittels einem Auftreffpunkt (48) des Laserstrahls (16) auf die Umfangsfläche (20) des rotierenden Werkstücks (12) in Bewegungsrichtung des Laserstrahls (16) über die Umfangsfläche (20) vorauseilt.

3. Verfahren nach Anspruch 1 oder 2, **dadurch gekennzeichnet, dass** das flüssige Antihaftmittel in einem konstanten Abstand von einem Auftreffpunkt (48) des Laserstrahls (16) auf die Umfangsfläche (20) des rotierenden Werkstücks (12) gesprüht wird.

4. Verfahren nach einem der vorangehenden Ansprüche, **dadurch gekennzeichnet, dass** das flüssige Antihaftmittel oberhalb von einem Auftreffpunkt (48) des Laserstrahls (16) auf die Umfangsfläche (20) des rotierenden Werkstücks (12) gesprüht wird.

5. Verfahren nach einem der vorangehenden Ansprüche, **dadurch gekennzeichnet, dass** das flüssige Antihaftmittel in Dreh- oder Umfangsrichtung des rotierenden Werkstücks (12) in einem Winkelabstand von weniger als 200 Grad von einem Auftreffpunkt (48) des Laserstrahls (16) auf die Umfangsfläche (20) des rotierenden Werkstücks (12) gesprüht wird.

6. Verfahren nach einem der vorangehenden Ansprüche, **dadurch gekennzeichnet, dass** das flüssige Antihaftmittel in Bewegungsrichtung des Laserstrahls (16) über die Umfangsfläche (20) unmittelbar vor einem Auftreffpunkt (48) des Laserstrahls (16) auf den Bewegungspfad (50) des Laserstrahls (16) gesprüht wird.

7. Verfahren nach einem der vorangehenden Ansprüche, **dadurch gekennzeichnet, dass** die Umfangsfläche (20) des rotierenden Werkstücks (12) beim Aufbringen des flüssigen Antihaftmittels auf einer Breite benetzt wird, die größer als die Breite des Bewegungspfades (50) des Laserstrahls (16) ist, und dass mindestens ein Teil des beiderseits des Bewegungspfades (50) des Laserstrahls (16) auf die Umfangsfläche (20) aufgebrachten flüssigen Antihaftmittels bei der Bearbeitung des Werkstücks (12) mit dem Laserstrahl (16) verdampft wird.

8. Vorrichtung zur Bearbeitung eines zylindrischen Werkstücks mit mindestens einem Laserstrahl, mit einer Einspannvorrichtung zum Einspannen des Werkstücks, einem Drehantrieb zum drehenden Antreiben des Werkstücks, einer Laserstrahlungsquelle zum Erzeugen des Laserstrahls und einem parallel zu einer Drehachse des rotierenden Werkstücks beweglichen, mit der Laserstrahlungsquelle verbundenen Laserbearbeitungswerkzeug, das den Laserstrahl auf eine Umfangsfläche des rotierenden Werkstücks lenkt, um entlang eines Bewegungspfades des Laserstrahls über die Umfangsfläche durch Schmelzen und/oder Verdampfen von Material Vertiefungen im Werkstück auszuheben, **gekennzeichnet durch** Einrichtungen (52, 54, 56, 58) zum Aufbringen eines die Anhaftung von Schmelzauswurf an der Umfangsfläche mindernden flüssigen Antihaftmittels entlang des Bewegungspfades (50) des Laserstrahls (16) auf die Umfangsfläche (20) des rotierenden Werkstücks (12).

9. Vorrichtung nach Anspruch 8, **dadurch gekennzeichnet, dass** die Einrichtungen (52, 54, 56, 58) zum Aufbringen des flüssigen Antihaftmittels auf die Umfangsfläche (20) des rotierenden Werkstücks (12) eine Sprühdüse (52) umfassen, durch die das flüssigen Antihaftmittel in Drehrichtung (A) des zylindrischen Werkstücks (12) vor einem Auftreffpunkt (48) des Laserstrahls (16) auf die Umfangsfläche (20) des Werkstücks (12) gesprüht werden kann.

10. Vorrichtung nach Anspruch 9, **dadurch gekennzeichnet, dass** die Sprühdüse (52) in Dreh- oder Umfangsrichtung des rotierenden Werkstücks (12) in einem Winkelabstand von weniger als 200 Grad vom Laserstrahl (16) angeordnet ist.

11. Vorrichtung nach Anspruch 8 oder 9, **dadurch gekennzeichnet, dass** eine Längsmittelachse (62) der Sprühdüse (52) und der Laserstrahl (16) eine Ebene aufspannen, die zu einer Drehachse (14) des zylindrischen Werkstücks (12) senkrecht ist.

12. Vorrichtung nach einem der Ansprüche 9 bis 11, **dadurch gekennzeichnet, dass** das Laserbearbeitungswerkzeug (18) und die Sprühdüse (52) gemeinsam auf einem Schlitten oder Wagen (26) montiert sind, der sich mittels eines Antriebs parallel zu einer Drehachse (14) des rotierenden Werkstücks (14) verfahren lässt.

13. Vorrichtung nach einem der Ansprüche 9 bis 11, **dadurch gekennzeichnet, dass** das Laserbearbeitungswerkzeug (18) und die Sprühdüse (52) auf zwei getrennten Schlitten oder Wagen (26, 66) montiert sind, die sich jeweils mittels eines Antriebs parallel zu einer Drehachse (14) des rotierenden Werkstücks (12) verfahren lassen.

## Claims

1. Method for machining a cylindrical workpiece with at least one laser beam, the workpiece being set in rotation and the laser beam being directed onto a circumferential surface of the rotating workpiece in order to make recesses in the workpiece along a path of movement of the laser beam over the circumferential surface by melting and/or vaporizing material, **characterized in that**, before machining with the laser beam (16), the circumferential surface (20) of the rotating workpiece (12) is wetted with a liquid anti-adhesive agent that minimizes the adhesive attachment of melt discharge on the circumferential surface (20), and **in that** the liquid anti-adhesive agent is applied to the circumferential surface (20) of the rotating workpiece (12) at a short time interval of less than 0.1 s before the making of the recesses along the path of movement (50) of the laser beam (16).

2. Method according to Claim 1, **characterized in that** the liquid anti-adhesive agent is sprayed onto the circumferential surface (20) of the rotating workpiece (12), a point of impingement (64) of a spray jet or spray cone (60) of the liquid anti-adhesive agent running ahead of a point of impingement (48) of the laser beam (16) on the circumferential surface (20) of the rotating workpiece (12) in the direction of movement of the laser beam (16) over the circumferential surface (20).

3. Method according to Claim 1 or 2, **characterized in that** the liquid anti-adhesive agent is sprayed onto the circumferential surface (20) of the rotating workpiece (12) at a constant distance from a point of impingement (48) of the laser beam (16).

4. Method according to one of the preceding claims, **characterized in that** the liquid anti-adhesive agent is sprayed onto the circumferential surface (20) of the rotating workpiece (12) above a point of impingement (48) of the laser beam (16).

5. Method according to one of the preceding claims, **characterized in that** the liquid anti-adhesive agent is sprayed onto the circumferential surface (20) of the rotating workpiece (12) at an angular distance of less than 200 degrees from a point of impingement (48) of the laser beam (16) in the direction of rotation or circumferential direction of the rotating workpiece (12).

6. Method according to one of the preceding claims, **characterized in that** the liquid anti-adhesive agent is sprayed onto the path of movement (50) of the laser beam (16) directly before a point of impingement (48) of the laser beam (16) in the direction of movement of the laser beam (16) over the circumferential surface (20).

7. Method according to one of the preceding claims, **characterized in that**, during the application of the liquid anti-adhesive agent, the circumferential surface (20) of the rotating workpiece (12) is wetted over a width that is greater than the width of the path of movement (50) of the laser beam (16), and **in that** at least some of the liquid anti-adhesive agent applied to the circumferential surface (20) on both sides of the path of movement (50) of the laser beam (16) is vaporized during the machining of the workpiece (12) with the laser beam (16).

8. Device for machining a cylindrical workpiece with at least one laser beam, comprising a clamping device for clamping the workpiece, a rotating drive for rotationally driving the workpiece, a laser radiation source for generating the laser beam and a laser machining tool, which is movable parallel to an axis of rotation of the rotating workpiece, is connected to the laser radiation source and guides the laser beam onto a circumferential surface of the rotating workpiece in order to make recesses in the workpiece along a path of movement of the laser beam over the circumferential surface by melting and/or vaporizing material, **characterized by** devices (52, 54, 56, 58) for applying a liquid anti-adhesive agent that reduces the adhesive attachment of melt discharge on the circumferential surface to the circumferential surface (20) of the rotating workpiece (12) along the path of movement (50) of the laser beam (16).

9. Device according to Claim 8, **characterized in that** the devices (52, 54, 56, 58) for applying the liquid anti-adhesive agent to the circumferential surface (20) of the rotating workpiece (12) comprise a spray nozzle (52), by which the liquid anti-adhesive agent can be sprayed onto the circumferential surface (20) of the workpiece (12) in the direction of rotation (A) of the cylindrical workpiece (12) before a point of impingement (48) of the laser beam (16).

10. Device according to Claim 9, **characterized in that** the spray nozzle (52) is arranged at an angular distance of less than 200 degrees from the laser beam (16) in the direction of rotation or circumferential direction of the rotating workpiece (12).

11. Device according to Claim 8 or 9, **characterized in that** a longitudinal centre axis (62) of the spray nozzle (52) and the laser beam (16) define a plane that is perpendicular to an axis of rotation (14) of the cylindrical workpiece (12).

12. Device according to one of Claims 9 to 11, **characterized in that** the laser machining tool (18) and the spray nozzle (52) are mounted together on a slide or carriage (26), which can be made to move parallel to an axis of rotation (14) of the rotating workpiece (14) by means of a drive.

13. Device according to one of Claims 9 to 11, **characterized in that** the laser machining tool (18) and the spray nozzle (52) are mounted on two separate slides or carriages (26, 66), which can respectively be made to move parallel to an axis of rotation (14) of the rotating workpiece (12) by means of a drive.

## Revendications

1. Procédé de traitement d'une pièce cylindrique à l'aide d'au moins un faisceau laser, la pièce cylindrique étant mise en rotation et le faisceau laser étant dirigé sur la surface périphérique de la pièce en rotation pour former des creux par fusion et/ou vaporisation de matière le long d'un parcours de déplacement du faisceau laser sur la surface périphérique de la pièce,
**caractérisé en ce que**
avant le traitement par le faisceau laser (16), la surface périphérique (20) de la pièce (12) en rotation est mouillée par un agent liquide anti-adhérence qui minimise l'adhérence des rejets de fusion sur la surface périphérique (20) et
**en ce que** l'agent liquide anti-adhérence est appliqué sur la surface périphérique (20) de la pièce (12) en rotation un court laps de temps, inférieur à 0,1 s, avant la formation des creux sur le parcours de déplacement (50) du faisceau laser (16).

2. Procédé selon la revendication 1, **caractérisé en ce que** l'agent liquide anti-adhérence est pulvérisé sur la surface périphérique (20) de la pièce (12) en rotation, le point d'incidence (64) du faisceau ou du cône (60) de pulvérisation de l'agent liquide anti-adhérence sur la surface périphérique (20) étant en avance par rapport au point d'incidence (48) du faisceau laser (16) sur la surface périphérique (20) de la pièce (12) en rotation dans la direction de déplacement du faisceau laser (16).

3. Procédé selon les revendications 1 ou 2, **caractérisé en ce que** l'agent liquide anti-adhérence est pulvérisé sur la surface périphérique (20) de la pièce (12) en rotation à une distance constante du point d'incidence (48) du faisceau laser (16).

4. Procédé selon l'une des revendications précédentes, **caractérisé en ce que** l'agent liquide anti-adhérence est pulvérisé au-dessus du point d'incidence (48) du faisceau laser (16) sur la surface périphérique (20) de la pièce (12) en rotation.

5. Procédé selon l'une des revendications précédentes, **caractérisé en ce que** l'agent liquide anti-adhérence est pulvérisé sur la surface périphérique (20) de la pièce (12) en rotation à une distance angulaire inférieure à 200 degrés du point d'incidence (48) du faisceau laser (16) dans la direction de rotation ou la direction périphérique de la pièce (12) en rotation.

6. Procédé selon l'une des revendications précédentes, **caractérisé en ce que** l'agent liquide anti-adhérence est pulvérisé sur la surface périphérique (20) immédiatement en avant du point d'incidence (48) du faisceau laser (16) sur le parcours de déplacement (50) du faisceau laser (16) dans le sens de déplacement du faisceau laser (16).

7. Procédé selon l'une des revendications précédentes, **caractérisé en ce que** la surface périphérique (20) de la pièce (12) en rotation est mouillée lors de l'application de l'agent liquide anti-adhérence sur une largeur supérieure à la largeur du parcours de déplacement (50) du faisceau laser (16) et **en ce qu'**au moins une partie de l'agent liquide anti-adhérence appliqué des deux côtés du parcours de déplacement (50) du faisceau laser (16) sur la surface périphérique (20) est vaporisé par le faisceau laser (16) lors du traitement de la pièce (12).

8. Dispositif de traitement d'une pièce cylindrique par au moins un faisceau laser, le dispositif présentant un dispositif de serrage qui serre la pièce, un entraînement en rotation qui entraîne la pièce en rotation, une source de rayonnement laser qui forme le faisceau laser et un outil de traitement laser relié à la source de faisceau laser et se déplaçant parallèlement à l'axe de rotation de la pièce en rotation, l'outil de traitement laser dirigeant le faisceau laser sur la surface périphérique de la pièce en rotation pour former dans la pièce des creux par fusion et/ou vaporisation de matière le long d'un parcours de déplacement du faisceau laser sur la surface périphérique,
**caractérisé par**
des dispositifs (52, 54, 56, 58) qui appliquent un agent liquide anti-adhérence qui diminue l'adhérence des rejets de fusion sur la surface périphérique le long du parcours de déplacement (50) du faisceau laser (16) sur la surface périphérique (20) de la pièce (12) en rotation.

9. Dispositif selon la revendication 8, **caractérisé en ce que** les dispositifs (52, 54, 56, 58) qui appliquent l'agent liquide anti-adhérence sur la surface périphérique (20) de la pièce (12) en rotation comprennent une tuyère de pulvérisation (52) par laquelle l'agent liquide anti-adhérence peut être pulvérisé dans le sens de rotation (A) de la pièce cylindrique (12) en avant du point d'incidence (48) du faisceau laser (16) sur la surface périphérique (20) de la pièce (12).

10. Dispositif selon la revendication 9, **caractérisé en ce que** la tuyère de pulvérisation (52) est disposée à un écart angulaire inférieur à 200 degrés par rapport au faisceau laser (16) dans le sens de rotation ou la direction périphérique de la pièce (12) en rotation.

11. Dispositif selon les revendications 8 ou 9, **caractérisé en ce que** l'axe longitudinal central (62) de la tuyère de pulvérisation (52) et le faisceau laser (16) sous-tendent un plan perpendiculaire à l'axe de rotation (14) de la pièce cylindrique (12).

12. Dispositif selon l'une des revendications 9 à 11, **caractérisé en ce que** l'outil (18) de traitement laser et la tuyère de pulvérisation (52) sont montés ensemble sur une glissière ou un chariot (26) qui peuvent être déplacés au moyen d'un entraînement parallèlement à l'axe de rotation (14) de la pièce en rotation (14).

13. Dispositif selon l'une des revendications 9 à 11, **caractérisé en ce que** l'outil (18) de traitement laser et la tuyère de pulvérisation (52) sont montés sur deux glissières ou chariots (26, 66) distincts qui peuvent être déplacés au moyen d'un entraînement parallèlement à l'axe de rotation (14) de la pièce (12) en rotation.
